# EUROPÄISCHE PATENTSCHRIFT

(11) **EP 3 554 908 B1**
(45) Veröffentlichungstag und Bekanntmachung des Hinweises auf die Patenterteilung: **12.07.2023**
(21) Anmeldenummer: 17816559.3
(22) Anmeldetag: 29.11.2017
(51) Int. Cl.: B60W 30/16, B60W 20/00, B60W 30/18, B60W 10/02, B60W 10/06

(54) **VERFAHREN ZUR STEUERUNG UND/ODER REGELUNG EINES ANTRIEBSSTRANGS EINES KRAFTFAHRZEUGS**
METHOD FOR THE OPEN-LOOP AND/OR CLOSED-LOOP CONTROL OF A POWERTRAIN OF A MOTOR VEHICLE
PROCÉDÉ POUR COMMANDER ET/OU RÉGULER UNE CHAÎNE CINÉMATIQUE D'UN VÉHICULE AUTOMOBILE

(30) Priorität: 14.12.2016 DE 102016224931
(43) Veröffentlichungstag der Anmeldung: 23.10.2019
(73) Patentinhaber: Volkswagen Aktiengesellschaft, 38440 Wolfsburg (DE)
(72) Erfinder: DICK, Vitali, 38448 Wolfsburg (DE); WEISS, Norbert, 38173 Sickte (DE); THIAMTONG, Vasoontara, 38442 Wolfsburg (DE)
(86) Internationale Anmeldenummer: PCT/EP2017/080815
(87) Internationale Veröffentlichungsnummer: WO 2018/108531

(56) Entgegenhaltungen:
- WO-A1-2005/110794
- WO-A1-2005/110794
- WO-A1-2016/021005
- WO-A1-2016/021005
- DE-A1-102008 054 663
- DE-A1-102008 054 663
- US-A1- 2014 336 907
- US-A1- 2014 336 907

## Beschreibung

Die Erfindung betrifft ein Verfahren zur Steuerung und/oder Regelung eines Antriebsstrangs eines Kraftfahrzeugs gemäß den Merkmalen des Oberbegriffs des Patentanspruches 1.

Aus dem Stand der Technik ist bereits im Allgemeinen bekannt, dass abhängig von unterschiedlichsten Betriebsbedingungen der Antriebsstrang während der Fahrt eines Kraftfahrzeuges in unterschiedlichen Betriebsmodi betrieben werden kann. Zum Beispiel kann die zwischen der Verbrennungskraftmaschine und dem Getriebe angeordnete Kupplung geöffnet werden. Bei somit "geöffnetem Antriebsstrang bzw. geöffneter Kupplung" wird das Fahrzeug dann entweder mit in der Leerlaufdrehzahl laufender Verbrennungskraftmaschine in einem sogenannten "Rollmodus" betrieben oder bei ausgeschalteter Verbrennungskraftmaschine in einem sogenannten "Segelmodus" betrieben.

Aus der DE 10 2010 031 036 A1, von der die Erfindung ausgeht, ist ein Verfahren zum Betrieb eines Kraftfahrzeugs bzw. eines Antriebsstranges bekannt, bei dem während des Fahrbetriebs der Kraftschluss zwischen der Verbrennungskraftmaschine und der Antriebsachse unterbrochen wird, insbesondere die zwischen Verbrennungskraftmaschine und Getriebe vorgesehene Kupplung geöffnet wird, und die Verbrennungskraftmaschine ausgeschaltet wird. Das Fahrzeug befindet sich somit in einem "Segelmodus". Bei Betätigung des Bremspedals durch den Fahrer wird der Kraftschluss zwischen der Verbrennungskraftmaschine und der wenigstens einen Antriebsachse wiederhergestellt, nämlich die Kupplung geschlossen, wobei das Fahrzeug sich dann in einem sogenannten "Schubbetrieb" oder auch "Schubmodus" befindet. Nach Beenden der Betätigung des Bremspedals durch den Fahrer wird der Kraftschluss zwischen der Verbrennungskraftmaschine und der Antriebsachse wieder unterbrochen, also die Kupplung geöffnet, wobei die Verbrennungskraftmaschine weiterhin im ausgeschalteten Zustand verbleibt, und das Fahrzeug somit wieder in den Segelmodus wechselt. Der Segelmodus wird hierbei durch eine Fahrpedalbetätigung beendet, wobei die Verbrennungskraftmaschine dann gestartet, und die Kupplung zur Übertragung des von einem Fahrer über das Fahrpedal vorgegebenen Wunschmoments geschlossen wird.

Aus der DE 10 2008 054 663 A1 ist ein Verfahren zum Betreiben eines Antriebsstranges eines Kraftfahrzeuges bekannt, wobei abhängig von definierten Betriebsbedingungen während einer Fahrt des Kraftfahrzeuges der Antriebsstrang bzw. die Kupplung geöffnet wird, so dass bei "geöffnetem Antriebsstrang" derselbe entweder bei laufendem Verbrennungsmotor in einem Rollmodus oder bei ausgeschaltetem Verbrennungsmotor in einem Segelmodus betrieben wird. Während der Fahrt des Kraftfahrzeuges wird hierbei fortlaufend abhängig von einem Fahrerwunsch eine Energiebilanz für den Antriebsstrang erstellt, wobei abhängig von dieser jeweils spezifisch bestehenden Energiebilanz dann der Antriebsstrang entsprechend betrieben, nämlich geöffnet oder geschlossen wird, um den Rollmodus oder den Segelmodus zu aktivieren oder zu deaktivieren. Der jeweilige Fahrerwunsch wird abhängig von einer Fahrpedalbetätigung und/oder einer Bremspedalbetätigung ermittelt. Alternativ oder zusätzlich ist es auch möglich, den jeweiligen Fahrerwunsch abhängig von den Daten einer "Fahrtregelungseinrichtung" zu ermitteln, wobei unter einer Fahrtregelungseinrichtung zum Beispiel ein Tempomat oder ein Abstandsregelungssystem verstanden wird.

Aus der DE 10 2008 054 663 A1 ist ein Verfahren zur Steuerung oder Regelung eines Antriebsstranges eines Kraftfahrzeugs bekannt, wobei der Antriebsstrang ein Automatikgetriebe und eine zwischen dem Verbrennungsmotor und dem Automatikgetriebe wirksam angeordnete Kupplung aufweist. Es ist ein Getriebe- /Motorsteuergerät vorgesehen, wobei mit Hilfe des Getriebesteuergerätes abhängig von definierten Betriebsbedingungen während einer Fahrt des Kraftfahrzeugs die Kupplung geöffnet oder geschlossen wird. Hierbei ist bei geöffneter Kupplung das Kraftfahrzeug bei laufendem Verbrennungsmotor in einem Rollmodus betreibbar sowie bei geöffneter Kupplung des Kraftfahrzeuges bei dann abgeschaltetem Verbrennungsmotor in einem Segelmodus betreibbar.

Die aus dem Stand der Technik bekannten Verfahren zur Steuerung und/oder Regelung eines Antriebsstrangs eines Kraftfahrzeugs sind aber noch nicht optimal ausgebildet, insbesondere was den Wechsel von einem Betriebsmodus in einen anderen Betriebsmodus eines Kraftfahrzeugs anbelangt. So wird bei dem Verfahren, von dem die Erfindung ausgeht, der Antriebsstrang des Kraftfahrzeuges nach Beendigung des Segelmodus dann im Schubbetrieb bzw. im Schubmodus betrieben. Hierdurch kommt es, insbesondere in Abhängigkeit auch davon, welcher weiterer Betriebsmodus sich dann an den Schubmodus anschließt, zu Antriebsverlusten bzw. zu einen großen Kraftstoffverbrauch, sowie damit zu einem im Zusammenhang stehenden großen CO₂-Ausstoß. Das im Stand der Technik bekannte Verfahren ist daher noch nicht optimal ausgebildet, insbesondere energie-ineffizient und wenig flexibel.

Der Erfindung liegt daher die Aufgabe zugrunde, dass bekannte Verfahren, von dem die Erfindung ausgeht, nun derart auszugestalten und weiterzubilden, dass der Betrieb eines Antriebsstranges eines Kraftfahrzeuges flexibler ausgestaltet ist, insbesondere Antriebsverluste im Antriebsstrang reduziert sind und/oder der CO₂-Ausstoß verringert ist.

Die zuvor aufgezeigte Aufgabe ist nun zunächst für das Verfahren durch die Merkmale des Patentanspruches 1 gelöst.

Wesentlich ist nun zunächst, dass nach dem Beenden der Bremspedalbetätigung die Kupplung geöffnet wird und dass dann ein Rollmodus des Kraftfahrzeuges realisiert wird, wobei bei einem zuvor abgeschalteten Verbrennungsmotor der Verbrennungsmotor gestartet und im Leerlauf betrieben wird, oder, wobei bei einem bereits laufenden Verbrennungsmotor dieser dann im Leerlauf betrieben wird.

Dies hat zur Folge, dass wenn das Kraftfahrzeug im Segel- oder Rollmodus betrieben wird und dann bei einer Bremspedalbetätigung zunächst dann die Kupplung geschlossen wird, insbesondere dann zunächst nun die Bremspedalbetätigung entsprechend überwacht wird und nach dem Beenden der Bremspedalbetätigung die Kupplung geöffnet wird, wobei das Kraftfahrzeug bzw. der Antriebsstrang dann nun in einem Rollmodus betrieben wird, d.h. dass das bei einem bereits laufenden Verbrennungsmotor dieser dann im Leerlauf (weiter) betrieben wird, wenn vor der Bremspedalbetätigung bereits ein Rollmodus realisiert war, oder, insbesondere wenn der Antriebsstrang zuvor im Segelmodus betrieben worden ist und der Verbrennungsmotor abgeschaltet war, dann nun insbesondere spätestens nach dem Beenden der Bremspedalbetätigung der Verbrennungsmotor gestartet und im Leerlauf betrieben wird. Dies hat einerseits zur Folge, dass das Kraftfahrzeug nach dem Beenden der Bremspedalbetätigung nicht direkt in einen Schubbetrieb wechselt bzw. der Antriebsstrang nicht im Schubbetrieb betrieben wird, wobei insbesondere zugleich der Verbrennungsmotor im Leerlauf betrieben wird, so dass weitere verschiedene eventuell gewünschte Betriebsmodi bei einem laufenden Verbrennungsmotor relativ schnell realisiert werden können. Der so ausgestaltete Antriebsstrang ist daher entsprechend "flexibel" ausgestaltet, Antriebsverluste werden vermieden und aufgrund der entsprechenden Steuerung kommt es dann auch zu einer energieeffizienten Ansteuerung des Antriebsstranges, insbesondere zu einer CO₂-Ersparnis.

Bei dem zuvor genannten Verfahren kann ein bereits abgeschalteter Verbrennungsmotor, wenn das Kraftfahrzeug zuvor im Segelmodus betrieben wird, bereits auch bei der Bremspedalbetätigung gestartet werden. Dies hat den Vorteil, dass die Anzahl der möglichen Betriebsmodi, wie ein Antriebsstrang betrieben werden kann, entsprechend weiter erhöht ist.

Weiterhin kann das Öffnen der Kupplung, nach dem Beenden der Bremspedalbetätigung auch von der Dauer und/oder der Intensität der Bremspedalbetätigung (und/oder auch einer insbesondere vorherigen Dauer bzw. Intensität einer Fahrpedalbetätigung) abhängen.

Weiterhin ist denkbar, dass das Öffnen der Kupplung zusätzlich abhängig ist von Daten einer Fahrtregelungseinrichtung und/oder zusätzlich abhängig von geographischen und/oder aktuellen Fahrstreckendaten, die insbesondere auch in einer Fahrtregelungseinrichtung abgespeichert und/oder einer Fahrtregelungseinrichtung übermittelt bzw. hier verarbeitet werden können. So können als geographische Fahrstreckendaten insbesondere die Neigung einer Fahrstrecke berücksichtigt werden oder als aktuelle Fahrstreckendaten insbesondere die Verkehrslage entlang der Fahrstrecke berücksichtigt werden.

Insbesondere wird die Kupplung geschlossen, wenn der Unterdruck im Bremskraftverstärker einen vorgegebenen Stellwert unterschreitet. Dies dient zur Bereitstellung des entsprechenden erforderlichen Druckes im Bremskraftverstärker.

Insbesondere kann der Antriebsstrang als ein Hybrid-Antriebsstrang ausgebildet sein, insbesondere also zusätzlich eine Elektromaschine (E-Maschine) in dem Antriebsstrang vorgesehen und/oder angeordnet sein.

Im Endeffekt sind die eingangs genannten Nachteile vermieden und entsprechende Vorteile erzielt, insbesondere ist ein flexibler, energieeffizienter und ein CO₂-armer Antriebsstrang für ein Kraftfahrzeug, insbesondere ein entsprechender Hybrid-Antriebsstrang, realisiert.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnung und der dazugehörigen Beschreibung näher erläutert werden. In der Zeichnung zeigt:
- Fig. 1: eine schematische Darstellung eines Antriebsstrangs eines Kraftfahrzeuges mit einem Verbrennungsmotor, insbesondere auch mit einer zusätzlichen E-Maschine, bei welchem das erfindungsgemäße Verfahren einsetzbar ist, und
- Fig. 2: einen schematischen Ablaufplan des erfindungsgemäßes Verfahrens.

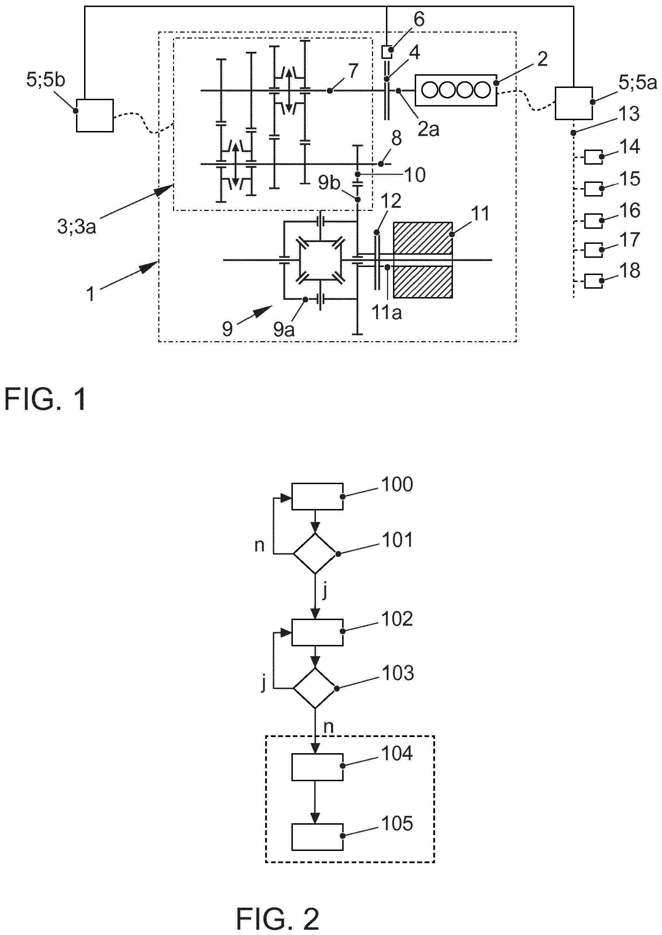

Fig. 1 zeigt in schematischer Darstellung zumindest teilweise einen Antriebsstrang 1. Das entsprechende Kraftfahrzeug mit einem derartigen Antriebsstrang 1 ist hier nicht im Einzelnen dargestellt.

Der Antriebsstrang 1 weist, wie aus Fig. 1 ersichtlich, einen Verbrennungsmotor 2 und mindestens ein Automatikgetriebe 3 auf. Das Automatikgetriebe 3 ist insbesondere als ein automatisiertes Schaltgetriebe 3a ausgeführt. Weiterhin weist der Antriebsstrang 1 eine zwischen dem Verbrennungsmotor 2 und dem Automatikgetriebe 3 angeordnete Kupplung 4 auf. Weiterhin ist mindestens eine Steuergerät 5, sind nun hier insbesonder zwei Steuergeräte 5a / 5b vorgesehen, insbesondere ein Motorsteuergerät 5a und ein Getriebesteuergerät 5b.

Wie aus Fig. 1 ersichtlich sind die Steuergeräte 5a / 5b, also das Motorsteuergerät 5a und das Getriebesteuergerät 5b miteinander über eine nicht näher bezeichnete Signal- und/oder Datenleitung schaltungstechnisch verknüpft und/oder verbunden und können die einzelnen Komponenten des Antriebsstranges 1 entsprechend ansteuern. Insbesondere ist auch die Kupplung 4 mit Hilfe mindestens eines Steuergerätes 5 und/oder mit Hilfe beider Steuergeräte 5a / 5b entsprechend ansteuerbar, insbesondere durch die Ansteuerung eines hier schematisch im Bereich der Kupplung 4 angeordneten Aktuators 6.

Fig. 1 zeigt, dass eine Antriebswelle 2a des Verbrennungsmotors 2 mit Hilfe der Kupplung 4 mit einer Getriebeeingangswelle 7 wirksam verbindbar ist. Weiterhin zeigt Fig. 1, dass das Automatikgetriebe 3 einerseits die Getriebeeingangswelle 7, anderseits die Getriebeausgangswelle 8 aufweist. Ferner ist ein Differential 9 vorgesehen, das einen Differentialkorb 9a und einen Differentialantriebsrad 9b aufweist. Die Getriebeausgangswelle 8 ist drehwirksam verbunden über ein Abtriebsrad 10, das mit dem Differentialantriebsrad 9b in Eingriff steht. Die Räder des Kraftfahrzeuges, die über die Ausgangwellen des Differentials 9 angetrieben werden, sind hier nicht explizit dargestellt.

Weiterhin zeigt Fig. 1, dass hier zusätzlch eine Elektromaschine 11 vorgesehen ist. Der Antriebsstrang 1 ist also insbesondere als ein Hybrid-Antriebsstrang 1 ausgebildet. Die E-Maschine 11 steht vorzugsweise über eine Antriebswelle 11a funktional wirksam in Verbindung mit dem Differentialkorb 9a. Die Antriebswelle 11a der E-Maschine 11 ist insbesondere als eine Hohlwelle ausgebildet. Weiterhin kann, wie hier dargestellt, eine Kupplung 12 zwischen E-Maschine 11 und Differential 9 angeornet sein, um die E-Maschine 11 an das Differential 9 an- bzw. abzukoppeln.

Grundsätzlich steuert und/oder regelt das Motorsteuergerät 5a den Verbrennungsmotor 2. Grundsätzlich steuert und/oder regelt das Getriebesteuergerät 5b die Schaltungen, insbesondere das Ein- und Auslegen der einzelnen Gangstufen im Automatikgetriebe 3, insbesondere im automatisierten Schaltgetriebe 3a. Die Steuergeräte 5a / 5b, insbesondere das Motorsteuergerät 5a und das Getriebesteuergerät 5b können hierzu entsprechende Signale und/oder Daten miteinander austauschen. Weiterhin wird über mindestens ein Steuergerät 5a / 5b die Kupplung 4 angesteuert, insbesondere entsprechend geöffnet oder geschlossen, insbesondere über das Getriebesteuergerät 5b. Die hier dargestellten Steuergeräte 5a / 5b können auch als ein einzelnes Steuergerät (5) ausgeführt sein.

Ferner können insbesondere dem Motorsteuergerät 5a weitere Signale und/oder Daten zugeleitet werden, nämlich die Stellung und/oder die Betätigung eines Fahrpedals 14, die Stellung und/oder Betätigung eines Bremspedals 15, die Signale und/oder Daten einer Fahrtregelungseinrichtung 16, die Signale und/oder Daten einer Abstandsregelungseinrichtung 17 und/oder die Signale und/oder Daten eines Navigationssystems 18. Die entsprechenden zuvor genannten Komponenten sind über eine Signal- und/oder Datenleitung 13 mit dem Motorsteuergerät 5a schaltungstechnisch verbunden.

So kann mit Hilfe der Fahrtregelungseinrichtung 16 für den Antriebsstrang 1 beispielsweise eine feste Fahrzeuggeschwindigkeit vorgegeben werden, die das Fahrzeug unabhängig vom Streckenprofil der Fahrstrecke einhalten soll.

Mit der Abstandsregelungseinrichtung 17 ist während der Fahrt eines Kraftfahrzeuges hier pernament ein Abstand zu einem davor fahrenden Fahrzeug erfassbar und dann, wenn sich der Abstand ändert, dieser Abstand wieder auf einen konstanten Abstand einstellbar / veränderbar, insbesondere wird das Fahrzeug entsprechend abgebremst oder beschleunigt, um einen definierten Abstand zu dem davor fahrenden Fahrzeug einzuhalten.

Als Fahrstreckendaten können insbesondere die Daten über die Neigung, also geographische, aber auch aktuelle Daten abgespeichert sein oder übermittelt werden. Als geographische Fahrstreckendaten können beispielsweise die Neigung der Fahrstrecke auch in einer Fahrtregelungseinrichtung 16 abgespeichert sein, wobei aktuelle Daten, insbesondere über die Verkehrslage insbesondere einem Navigationssystem 18 sowie insbesondere auch der Fahrtregelungseinrichtung 16 übermittelt werden können. Die Neigung einer Fahrstrecke kann insbesondere auch über einen Neigungssensor aktuell ermittelt werden. Ein Neigungssensor ist in Fig. 1 graphisch hier aber nicht dargestellt bzw nicht angedeutet.

Insbesondere können aktuelle Fahrstreckendaten auf dem Navigationssystem 18 zur Verfügung gestellt werden. Dies gilt nicht nur über die aktuelle Verkehrslage bzw. über den Verkehrsfluss, sondern auch für andere Fahrstreckendaten, wie Verkehrsschilder (Geschwindigkeitsbegrenzungen), Wetterberichte (Eis- und/oder Glättegefahr) oder dergleichen.

In Fig. 2 ist nun ein schematischer Ablauf des erfindungsgemäßen Verfahrens dargestellt:
Das erfindungsgemäße Verfahren läuft ab, wenn sich wie bei Block 100 das Fahrzeug bzw. der Antriebsstrang 1 im Fahrbetrieb befindet, nämlich bei geöffneter Kupplung 4 und bei laufendem Verbrennungsmotor 2 das Fahrzeug sich in einem Rollmodus befindet oder bei geöffneter Kupplung 4 und bei abgeschalteten Verbrennungsmotor 2 das Fahrzeug sich in einem Segelmodus befindet. Anders ausgedrückt, bei "Block 100" ist das Kraftfahrzeug im Roll- oder Segelmodus und die Kupplung 4 geöffnet.

Schritt 101 zeigt die Betätigung / Überwachung des Bremspedals des Kraftfahrzeuges bzw wird im Schritt 101 also abgefragt, ob das Bremspedal 15 betätigt wird. Wird das Bremspedal 15 nicht betätigt (N = Nein), so verbleibt das Fahrzeug im Roll- oder Segelmodus, wie im Block 100 dargestellt. Wird das Bremspedal 15 betätigt (J = Ja), so wird die Kupplung 4 geschlossen. Die im Antriebsstrang 1 geschlossene Kupplung 4 soll daher durch den Block 102 dargestellt sein.

Nun wird im Schritt 103 die Bremspedalbetätigung des Bremspedals 15 wieder entsprechend überwacht. Wird das Bremspedal 15 noch betätigt, hat also der Fahrer den Fuß noch auf dem Bremspedal 15 (J = Ja), bleibt die Kupplung 4 geschlossen. Wird das Bremspedal 15 vom Fahrer nicht betätigt (N = Nein), ist also die Betätigung des Bremspedals 15 beendet bzw. abgeschlossen, wird die Kupplung 4 geöffnet, was durch den Block 104 dargestellt sein soll und wobei dann der Rollmodus des Kraftfahrzeuges realisiert wird. Insbesondere wird ein zuvor eventuell abgeschalteter Verbrennungsmotor 2 dann gestartet und im Leerlauf betrieben, oder, wenn der Verbrennungsmotor 2 bereits läuft, dieser im Leerlauf betrieben, was durch Block 105 dargestellt sein soll. Allerdings gehören Block 104 und Block 105 im Wesentlichen zusammen und können im Wesentlichen insbesondere auch gleichzeitig durchgeführt werden, wobei bei einer spezifischen Ausführungsform des Verfahrens der Verbrennungsmotor 2 auch bereits gestartet werden kann, wenn das Bremspedal 15 betätigt wird. Letzteres führt dann insbesondere nicht zu Zeitverzögerungen beim Starten eines Verbrennungsmotors 2.

Wie bereits eingangs erwähnt kann das Öffnen der Kupplung 4 zusätzlich von der Dauer und/oder der Intensität der Bremspedalbetätigung des Bremspedals 15 abhängig sein. Insbesondere kann das Öffnen der Kupplung 4 auch von einer insbesondere vorherigen Dauer und/oder Intensität einer ermittelten Fahrpedalbetätigung des Fahrpedals 14 abhängig sein. Dies ist insbesondere abhängig von der spezifischen Ausführungsform des erfindungsgemäßen Verfahrens.

Weiterhin kann das Öffnen der Kupplung 4 zusätzlich abhängig gemacht werden von Daten der Fahrtregelungseinrichtung 16, insbesondere abhängig gemacht werden von geographischen und/oder aktuellen Fahrstreckendaten. So kann, wenn die Neigung einer Fahrstrecke einen bestimmten Neigungswinkel übersteigt, das Verfahren abgebrochen werden, insbesondere die Kupplung 4 eben nicht geöffnet oder möglicherweise wieder geschlossen werden, wenn des Bremspedal 15 nicht mehr betätigt wird bzw. die Betätigung des Bremspedals 15 beendet ist. Dies kann vor allem bei starken Bergabfahrten gelten.

Auch bei bestimmten aktuellen Fahrstreckendaten wie der Verkehrslage und/oder eines aktuellen Verkehrsflusses, insbesondere bei der Meldung eines "Staus", kann nach dem Beenden der Bremspedalbetätigung das Öffnen der Kupplung verhindert werden, insbesondere um dann einen "Stop-and-Go-Betrieb" des Kraftfahrzeuges zu realisieren.

Insbesondere wird ein Öffnen der Kupplung verhindert bzw. die Kupplung 4 wieder geschlossen, wenn der Unterdruck im Bremskraftverstärker einen vorgegebenen Stellwert unterschreitet.

Ein Antriebsstrang 1, insbesondere auch ein als Hybrid-Antriebsstrang ausgebildeter Antriebsstrang 1, der eine entsprechende Elektromaschine 11 aufweist, ist daher entsprechend flexibel und kann energie- und kosteneffizient betrieben werden.

### Bezugszeichenliste

- 1: Antriebsstrang
- 2: Verbrennungsmotor
- 2a: Antriebswelle
- 3: Automatikgetriebe
- 3a: automatisiertes Schaltgetriebe
- 4: Kupplung
- 5: Steuergerät
- 5a: Motorsteuergerät
- 5b: Getriebesteuergerät
- 6: Aktuator
- 7: Getriebeeingangswelle
- 8: Getriebeausgangswelle
- 9: Differential
- 9a: Differentialkorb
- 9b: Differentialantriebsrad
- 10: Abtriebsrad
- 11: E-Maschine
- 11a: Antriebswelle
- 12: Kupplung
- 13: Datenleitung
- 14: Fahrpedal
- 15: Bremspedal
- 16: Fahrtregelungseinrichtung
- 17: Abstandsregelungseinrichtung
- 18: Navigationssystem

## Patentansprüche

1. Verfahren zur Steuerung und/oder Regelung eines Antriebsstrangs (1) eines Kraftfahrzeugs, wobei der Antriebsstrang (1) mindestens einen Verbrennungsmotor (2), mindestens ein Automatikgetriebe (3), insbesondere ein automatisiertes Schaltgetriebe (3a), und mindestens eine zwischen dem Verbrennungsmotor und dem Automatikgetriebe wirksam angeordnete Kupplung (4) aufweist, wobei mindestens ein Steuergerät (5), insbesondere ein Getriebe- (5b) und/oder ein Motorsteuergerät (5a), vorgesehen ist, wobei mit Hilfe des Steuergerätes (5) abhängig von definierten Betriebsbedingungen während einer Fahrt des Kraftfahrzeugs die Kupplung (4) geöffnet oder geschlossen wird, wobei bei geschlossener Kupplung (4) der Verbrennungsmotor (2) mit dem Automatikgetriebe (3) wirksam gekoppelt ist und bei geöffneter Kupplung (4) der Verbrennungsmotor (2) vom Automatikgetriebe (3) wirksam entkoppelt ist, wobei bei geöffneter Kupplung (4) das Kraftfahrzeug bei laufendem Verbrennungsmotor (2) in einem Rollmodus betreibbar ist, oder, wobei bei geöffneter Kupplung (4) das Kraftfahrzeug bei abgeschaltetem Verbrennungsmotor (2) in einem Segelmodus betreibbar ist, und wobei in dem Rollmodus oder in dem Segelmodus bei einer Bremspedalbetätigung dann die Kupplung (4) geschlossen wird, **dadurch gekennzeichnet, dass** nach dem Beenden der Bremspedalbetätigung die Kupplung (4) geöffnet wird und dass dann ein Rollmodus des Kraftfahrzeuges realisiert wird, wobei bei einem zuvor abgeschaltetem Verbrennungsmotor (2) der Verbrennungsmotor (2) gestartet und im Leerlauf betrieben wird, oder, wobei bei einem bereits laufendem Verbrennungsmotor (2) dieser dann im Leerlauf betrieben wird.

2. Verfahren nach Anspruch 1, **dadurch gekennzeichnet, dass** bei abgeschaltetem Verbrennungsmotor (2), wenn das Kraftfahrzeug zuvor im Segelmodus betrieben wird, dieser bereits bei der Bremspedalbetätigung gestartet wird.

3. Verfahren nach Anspruch 1 oder 2 **dadurch gekennzeichnet, dass** das Öffnen der Kupplung (4) zusätzlich von der Dauer der Bremspedalbetätigung oder der vorherigen Dauer der Fahrpedalbetätigung abhängig ist.

4. Verfahren nach einem der Ansprüche 1 bis 3, **dadurch gekennzeichnet, dass** das Öffnen der Kupplung (4) zusätzlich von der Intensität der Bremspedalbetätigung oder der Intensität der vorherigen Fahrpedalbetätigung abhängig ist.

5. Verfahren nach einem der Ansprüche 1 bis 4, **dadurch gekennzeichnet, dass** das Öffnen der Kupplung (4) zusätzlich abhängig von Daten einer Fahrtregelungseinrichtung (16) ist, nämlich dass das Öffnen der Kupplung (4) zusätzlich abhängig von geographischen und/oder aktuellen Fahrstreckendaten durchgeführt wird, die in der Fahrtregelungseinrichtung (16) abgespeichert sind und/oder der Fahrtregelungseinrichtung (16) übermittelt bzw. hier bearbeitet werden, insbesondere dass als Fahrstreckendaten die Neigung der Fahrstrecke und/oder dass als Fahrstreckendaten die Verkehrslage entlang der Fahrstrecke berücksichtigt wird.

6. Verfahren nach einem der Ansprüche 1 bis 5, **dadurch gekennzeichnet, dass** die Kupplung (4) geschlossen wird, wenn der Unterdruck im Bremskraftverstärker einen vorgegebenen Schwellwert unterschreitet.

7. Verfahren nach einem der Ansprüche 1 bis 6, **dadurch gekennzeichnet, dass** zusätzlich eine E-Maschine (11) in dem Antriebstrang (1) vorgesehen und/oder angeordnet ist, insbesondere der Antriebsstrang (1) als ein Hybrid-Antriebsstrang ausgebildet ist.

## Claims

1. Method for the open-loop and/or closed-loop control of a drivetrain (1) of a motor vehicle, wherein the drivetrain (1) has at least one internal combustion engine (2), at least one automatic transmission (3), in particular an automated manual transmission (3a), and at least one clutch (4) effectively arranged between the internal combustion engine and the automatic transmission, wherein at least one control device (5), in particular a transmission control device (5b) and/or an engine control device (5a), is provided, wherein, by using the control device (5), the clutch (4) is disengaged or engaged during travel of the motor vehicle, depending on defined operating conditions, wherein, when the clutch (4) is engaged, the internal combustion engine (2) is effectively coupled to the automatic transmission (3) and, when the clutch (4) is disengaged, the internal combustion engine (2) is effectively uncoupled from the automatic transmission (3), wherein, when the clutch (4) is disengaged, the motor vehicle can be operated in a rolling mode with the internal combustion engine (2) running, or, wherein, when the clutch (4) is disengaged, the motor vehicle can be operated in a coasting mode with the internal combustion engine (2) switched off, and wherein, in the rolling mode or in the coasting mode, the clutch (4) is then engaged when the brake pedal is actuated, **characterized in that,** after the brake pedal actuation has been ended, the clutch (4) is disengaged and **in that** a rolling mode of the motor vehicle is then implemented, wherein, if the internal combustion engine (2) has previously been switched off, the internal combustion engine (2) is started and is operated in idling mode, or, wherein, if the internal combustion engine (2) is already running, the latter is then operated in idling mode.

2. Method according to Claim 1, **characterized in that** when the internal combustion engine (2) is switched off, if the motor vehicle has previously been operated in coasting mode, the internal combustion engine is already started when the brake pedal is actuated.

3. Method according to Claim 1 or 2, **characterized in that** the disengagement of the clutch (4) additionally depends on the duration of the brake pedal actuation or the previous duration of the accelerator pedal actuation.

4. Method according to one of Claims 1 to 3, **characterized in that** the disengagement of the clutch (4) additionally depends on the intensity of the brake pedal actuation or the intensity of the previous accelerator pedal actuation.

5. Method according to one of Claims 1 to 4, **characterized in that** the disengagement of the clutch (4) is additionally dependent on data from a cruise control device (16), specifically **in that** the disengagement of the clutch (4) is additionally carried out depending on geographic and/or current route data which is stored in the cruise control device (16) and/or is transmitted to the cruise control device (16) or processed here, in particular **in that** the inclination of the route is taken into account as route data and/or **in that** the traffic situation along the route is taken into account as route data.

6. Method according to one of Claims 1 to 5, **characterized in that** the clutch (4) is engaged if the vacuum in the brake booster falls below a predefined threshold value.

7. Method according to one of Claims 1 to 6, **characterized in that** an electric machine (11) is additionally provided and/or arranged in the drivetrain (1), in particular the drivetrain (1) is formed as a hybrid drivetrain.

## Revendications

1. Procédé de commande et/ou de régulation d'une chaîne cinématique (1) d'un véhicule automobile, la chaîne cinématique (1) présentant au moins un moteur à combustion interne (2), au moins une transmission automatique (3), notamment une boîte de vitesses automatisée (3a), et au moins un embrayage (4) agencé de manière active entre le moteur à combustion interne et la transmission automatique, au moins un appareil de commande (5) étant prévu, notamment un appareil de commande de transmission (5b) et/ou de moteur (5a), l'embrayage (4) étant ouvert ou fermé à l'aide de l'appareil de commande (5) en fonction de conditions de fonctionnement définies pendant un trajet du véhicule automobile, le moteur à combustion interne (2) étant couplé activement à la transmission automatique (3) lorsque l'embrayage (4) est fermé et le moteur à combustion interne (2) étant découplé activement de la transmission automatique (3) lorsque l'embrayage (4) est ouvert ; lorsque l'embrayage (4) est ouvert, le véhicule automobile pouvant fonctionner dans un mode de roulement lorsque le moteur à combustion interne (2) est en marche, ou, lorsque l'embrayage (4) est ouvert, le véhicule automobile pouvant fonctionner dans un mode de roue libre lorsque le moteur à combustion interne (2) est arrêté, et, dans le mode de roulement ou dans le mode de roue libre, l'embrayage (4) étant alors fermé lors d'un actionnement de la pédale de frein, **caractérisé en ce qu'**après la fin de l'actionnement de la pédale de frein, l'embrayage (4) est ouvert et **en ce qu'**un mode de roulement du véhicule automobile est alors réalisé, le moteur à combustion interne (2) étant démarré et fonctionnant au ralenti lorsque le moteur à combustion interne (2) était préalablement arrêté, ou, le moteur à combustion interne (2) fonctionnant alors au ralenti lorsque celui-ci était déjà en marche.

2. Procédé selon la revendication 1, **caractérisé en ce que,** lorsque le moteur à combustion interne (2) est arrêté, si le véhicule automobile fonctionne préalablement en mode de roue libre, celui-ci est démarré dès l'actionnement de la pédale de frein.

3. Procédé selon la revendication 1 ou 2, **caractérisé en ce que** l'ouverture de l'embrayage (4) dépend en outre de la durée de l'actionnement de la pédale de frein ou de la durée précédente de l'actionnement de la pédale d'accélération.

4. Procédé selon l'une quelconque des revendications 1 à 3, **caractérisé en ce que** l'ouverture de l'embrayage (4) dépend en outre de l'intensité de l'actionnement de la pédale de frein ou de l'intensité de l'actionnement précédent de la pédale d'accélération.

5. Procédé selon l'une quelconque des revendications 1 à 4, **caractérisé en ce que** l'ouverture de l'embrayage (4) dépend en outre de données d'un dispositif de régulation de la conduite (16), à savoir **en ce que** l'ouverture de l'embrayage (4) est effectuée en outre en fonction de données de trajet géographiques et/ou actuelles, qui sont mémorisées dans le dispositif de régulation de la conduite (16) et/ou qui sont transmises au dispositif de régulation de la conduite (16) ou y sont traitées, notamment **en ce que** l'inclinaison du trajet est prise en compte en tant que données de trajet et/ou **en ce que** la situation du trafic le long du trajet est prise en compte en tant que données de trajet.

6. Procédé selon l'une quelconque des revendications 1 à 5, **caractérisé en ce que** l'embrayage (4) est fermé lorsque la dépression dans l'amplificateur de frein est inférieure à une valeur seuil prédéfinie.

7. Procédé selon l'une quelconque des revendications 1 à 6, **caractérisé en ce qu'en** plus, une machine électrique (11) est prévue et/ou agencée dans la chaîne cinématique (1), notamment la chaîne cinématique (1) est configurée sous la forme d'une chaîne cinématique hybride.
